# EUROPEAN PATENT APPLICATION

(11) **EP 4 672 368 A1**
(43) Date of publication of application: **31.12.2025**
(21) Application number: 24884160.3
(22) Date of filing: 21.08.2024
(51) Int. Cl.: H01M 4/36, H01M 4/38, H01M 4/587, H01M 4/134, H01M 4/133

(54) **SILICON-CARBON COMPOSITE MATERIAL AND PREPARATION METHOD THEREFOR, NEGATIVE ELECTRODE SHEET, SECONDARY BATTERY, AND ELECTRICAL DEVICE**

(30) Priority: 02.11.2023 CN 202311444808
(71) Applicant: Contemporary Amperex Technology Co., Limited, Ningde, Fujian 352100 (CN)
(72) Inventor: WU, Kai, Ningde, Fujian 352100 (CN); CHEN, Ning, Ningde, Fujian 352100 (CN); SHI, Dongyang, Ningde, Fujian 352100 (CN); DENG, Yaqian, Ningde, Fujian 352100 (CN); LIU, Zhi, Ningde, Fujian 352100 (CN); LV, Ruijing, Ningde, Fujian 352100 (CN); CHENG, Zhipeng, Ningde, Fujian 352100 (CN)
(74) Representative: Jacob, Reuben Ellis
(86) International application number: PCT/CN2024/113754
(87) International publication number: WO 2025/092153

(57) **Abstract**

The present application relates to a silicon-carbon composite material and a preparation method therefor, a negative electrode sheet, a secondary battery, and an electrical device. The silicon-carbon composite material comprises a porous carbon matrix and a silicon-based material layer located in pores of the porous carbon matrix, the silicon-based material layer comprises a sub-nano silicon cluster and a sub-nano silicon carbide cluster, and the surface of the sub-nano silicon carbide cluster is in contact with the surface of the sub-nano silicon cluster. The silicon-carbon composite material has small expansibility, good cycle performance and fast charging performance and high energy density.

## Description

### CROSS-REFERENCE TO RELATED APPLICATIONS

The present application claims priority to Chinese Patent Application No. 2023114448084, filed on November 2, 2023 and entitled "Silicon-carbon Composite Material And Preparation Method Therefor, Negative Electrode Sheet, Secondary Battery, And Electrical Device", which is incorporated herein by reference in its entirety.

### TECHNICAL FIELD

The present application relates to the field of battery material technologies, and in particular, to a silicon-carbon composite material and a preparation method therefor, a negative electrode sheet, a secondary battery, and an electrical device.

### BACKGROUND

In recent years, as the application range of lithium ion batteries becomes wider, the lithium ion batteries are widely used in various fields such as energy storage power systems such as hydraulic power stations, thermal power stations, wind power stations, and solar power stations, as well as a plurality of fields such as power tools, electric bicycles, electric motorcycles, electric vehicles, military equipment, and aerospace. Due to great development of the lithium ion batteries, higher requirements are put forward for energy density, cycle performance, safety performance, and the like of the lithium ion batteries.

Silicon-based materials are concerned due to the much higher capacity than carbon-based materials, because the higher capacity means that the higher energy density can be achieved. However, the silicon-based materials can have a huge volume change (greater than 300%) during charging and discharging, and such a change causes destruction of a material structure and pulverization of particles, thereby causing rapid attenuation of the electrode capacity and even a failure of an electrode. Therefore, at present, the silicon-based material and the carbon-based material are often used in combination when an electrode sheet is manufactured. However, an existing silicon-carbon composite material still has the problems of the high expansion and the short cycle life.

### SUMMARY

The present application provides a silicon-carbon composite material with low expansion and long cycle life and a preparation method therefor, a negative electrode sheet using the silicon-carbon composite material, a secondary battery, and an electrical device.

A first aspect of the present application provides a silicon-carbon composite material, comprising a porous carbon matrix and a silicon-based material layer located in pores of the porous carbon matrix, where the silicon-based material layer comprises a sub-nano silicon cluster and a sub-nano silicon carbide cluster, and the surface of the sub-nano silicon carbide cluster is in contact with the surface of the sub-nano silicon cluster.

In the silicon-carbon composite material, the silicon-based material layer is disposed in the pores of the porous carbon matrix, and the pores can reserve space for expansion of silicon, thereby reducing crushing of silicon-carbon composite material particles and prolonging the cycle life. In addition, the presence of silicon carbide limits size growth of silicon, promotes formation of the sub-nano silicon cluster, and final formation of the sub-nano silicon carbide cluster and the sub-nano silicon cluster whose surfaces are in contact with each other. Compared with conventional nano silicon, the sub-nano silicon cluster has smaller expansibility, which reduces an expansion stress of the material, further reduce the crushing of silicon-carbon composite particles, and improve the cycle performance.

In one of embodiments, the sub-nano silicon cluster has a radial size of 0.2 nm to 1 nm.

In one of embodiments, the sub-nano silicon carbide cluster has a radial size of 0.2 nm to 1 nm.

In one of embodiments, the porous carbon matrix has a specific surface area of greater than or equal to 800 m²/g. By using the porous carbon matrix with an ultra-high specific surface area, more silicon-based materials can be deposited, thereby increasing a high energy density of the material.

Optionally, the porous carbon matrix has a specific surface area of 800 m²/g to 2000 m²/g.

Further optionally, the porous carbon matrix has a specific surface area of 800 m²/g to 1700 m²/g.

Still further optionally, the porous carbon matrix has a specific surface area of 800 m²/g to 1200 m²/g.

In one of embodiments, the total volume of the silicon-based material layer is smaller than the total volume of the pores.

Optionally, the total volume of the silicon-based material layer accounts for 10% to 60% of the total volume of the pores. In this way, on the one hand, the high energy density can be improved; and on the other hand, the crushing of silicon-carbon composite particles can be reduced, and the cycle performance can be improved. In addition, fast charging performance can further be optimized to a certain extent.

Further optionally, the total volume of the silicon-based material layer accounts for 10% to 50% of the total volume of the pores.

Still further optionally, the total volume of the silicon-based material layer accounts for 10% to 30% of the total volume of the pores.

In one of embodiments, the thickness of the silicon-based material layer is smaller than the pore diameter of the pore.

Optionally, the pore has an average pore diameter of 5 nm to 50 nm. In this way, on the one hand, the high energy density can be improved; and on the other hand, the crushing of silicon-carbon composite material particles can be reduced, and the cycle performance can be improved. In addition, the fast charging performance can further be improved to a certain extent.

Further optionally, the pore has an average pore diameter of 5 nm to 40 nm.

Still further optionally, the pore has an average pore diameter of 5 nm to 25 nm.

Optionally, the silicon-based material layer has an average thickness of 2 nm to 20 nm.

Further optionally, the silicon-based material layer has an average thickness of 2 nm to 18 nm.

Further optionally, the silicon-based material layer has an average thickness of 2 nm to 10 nm.

In one of embodiments, the silicon-carbon composite material has a particle diameter Dv50 of 3 µm to 30 µm. In this way, on the one hand, deterioration of the cycle performance caused by side reactions during a cycle process can be reduced; and on the other hand, a diffusion distance of ions is reduced, and the fast charging performance is improved. In addition, a longer cycle life is further achieved.

Optionally, the silicon-carbon composite material has a particle diameter Dv50 of 10 µm to 30 µm.

Further optionally, the silicon-carbon composite material has a particle diameter Dv50 of 10 µm to 20 µm.

In one of embodiments, the surface of the porous carbon matrix is further coated with a coating layer.

Optionally, the coating layer comprises a carbon coating layer. Further optionally, a material of the carbon coating layer comprises amorphous carbon. Optionally, the coating layer has an average thickness of 5 nm to 60 nm.

In one of embodiments, in the silicon-carbon composite material, a silicon element has a mass percentage of 20% to 40%, and a carbon element has a mass percentage of 60% to 80%.

In one of embodiments, the silicon-carbon composite material comprises one or two of the following features:
(1) the tap density is 0.7 g/m³ to 1.3 g/m³; and
(2) the specific surface area is 0.8 m²/g to 1.5 m²/g.

A second aspect of the present application provides a preparation method for a silicon-carbon composite material, comprising the following steps:
depositing a silicon-based material layer in pores of a porous carbon matrix, where the silicon-based material layer comprises a sub-nano silicon cluster and a silicon carbide cluster, and the surface of the sub-nano silicon carbide cluster is in contact with the surface of the sub-nano silicon cluster.

The preparation method has simple steps, and is suitable for industrial popularization and application.

In one of embodiments, the depositing a silicon-based material layer in pores of a porous carbon matrix comprises:
placing the porous carbon matrix in a reaction vessel, and introducing a gas mixture of a silicon source gas and a carbon source gas for vapor deposition.

In one of embodiments, the introducing a gas mixture of a silicon source gas and a carbon source gas for vapor deposition comprises one or more of the following features:
(1) in the gas mixture, the volume of the silicon source gas to the carbon source gas is 10:(1~5);
(2) the silicon source gas comprises SiH₄;
(3) the carbon source gas comprises C₂H₄;
(4) the flow rate of the gas mixture is 0.05 L/min to 0.2 L/min;
(5) the deposition temperature is 400°C to 600°C; and
(6) deposition time is 30 min to 2 h.

In one of embodiments, after the depositing a silicon-based material layer, the method further comprises a step of preparing a coating layer on the surface of the porous carbon matrix.

Optionally, a method for preparing a coating layer on the surface of the porous carbon matrix comprises a vapor deposition method.

In one of embodiments, a preparation method for the porous carbon matrix comprises a template method, an acid-base activation method, or a pyrolysis method. Optionally, the preparation method for the porous carbon matrix comprises the acid-base activation method.

In one of embodiments, the preparation method for the porous carbon matrix comprises:
mixing a template agent, a carbon source, and a solvent to prepare a carbon solution;
performing first heat treatment on the carbon solution, and then drying to prepare an expanded carbon precursor;
performing second heat treatment on the expanded carbon precursor to prepare a carbonized intermediate; and
removing the template agent in the carbonized intermediate to prepare the porous carbon matrix.

In one of embodiments, the preparation method for the porous carbon matrix has one or more of the following features:
(1) a mass ratio of the template agent to the carbon source is (1~10):1;
(2) temperature of the first heat treatment is 70°C to 90°C, and time of the first heat treatment is 6 h to10 h;
(3) temperature of drying is 120°C to 140°C, and time of drying is 1 h to 4 h; and
(4) the second heat treatment comprises: heating to 400°C to 600°C at a heating rate of 3°C/min to 10°C/min for 2 h to 6 h.

A third aspect of the present application provides a negative electrode sheet, comprising a negative electrode current collector and a negative electrode active material layer disposed on at least one surface of the negative electrode current collector. The negative electrode active material layer comprises one or more of the silicon-carbon composite material according to the first aspect and the silicon-carbon composite material prepared in the preparation method according to the second aspect.

The negative electrode sheet in the present application comprises a silicon-carbon composite material provided in the present application, and thus has at least the same advantages as the silicon-carbon composite material.

A fourth aspect of the present application provides a secondary battery, comprising the positive electrode sheet according to the third aspect.

The secondary battery in the present application comprises a negative electrode sheet provided in the present application, and thus has at least the same advantages as the negative electrode sheet.

A fifth aspect of the present application provides an electrical device, comprising one or more of the negative electrode sheet according to the third aspect and the secondary battery according to the fourth aspect.

The electrical device in the present application comprises a negative electrode sheet or a secondary battery provided in the present application, and thus has the same advantages as the negative electrode sheet or the secondary battery.

Details of one or a plurality of embodiments of the present application are set forth in the accompanying drawings and the description below. Other features, objectives, and advantages of the present application will be apparent from the specification, and the content recorded in the accompanying drawings.

### DESCRIPTION OF DRAWINGS

To better describe and illustrate embodiments and/or examples provided in the present application, reference may be made to one or a plurality of accompanying drawings. Additional details or examples used to describe the accompanying drawings should not be considered as limiting the scope of any of the disclosed application, the currently described embodiments or examples, and best modes of these applications as currently understood. Moreover, the same reference numerals are used to denote the same components throughout the accompanying drawings. In the accompanying drawings:
FIG. 1 is a schematic diagram of a battery cell according to an implementation of the present application;
FIG. 2 is an exploded view of the battery cell shown in FIG. 1 according to an implementation of the present application;
FIG. 3 is a schematic diagram of a battery module according to an implementation of the present application;
FIG. 4 is a schematic diagram of a battery pack according to an implementation of the present application;
FIG. 5 is an exploded view of the battery pack shown in FIG. 4 according to an implementation of the present application;
FIG. 6 is a schematic diagram of an electrical device using a secondary battery as a power supply according to an implementation of the present application;
FIG. 7 is an electron microscope image of a porous carbon matrix according to an implementation of the present application;
FIG. 8 is an electron microscope image of a silicon-based material layer according to an implementation of the present application;
FIG. 9 is an electron microscope image of a silicon-based material layer according to an implementation of the present application; and
FIG. 10 is an electron microscope image of a silicon-based material layer according to another implementation of the present application.

### Description of reference signs:

1: battery pack; 2: upper case; 3: lower case; 4: battery module; 5: battery cell; 51; housing; 52: electrode assembly; 53: cover plate; and 6: electrical device.

### DESCRIPTION OF EMBODIMENTS

The following describes in detail some implementations of a silicon-carbon composite material and a preparation method therefor, a negative electrode sheet, a secondary battery, and an electrical device in the present application with appropriate reference to the accompanying drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand the present application, and are not intended to limit the subject matter described in the claims.

The "range" disclosed in the present application may be limited in the form of a lower limit and an upper limit. A given range is limited by selecting a lower limit and an upper limit, which define the boundaries of the specific range. A range defined in this manner may include an end value or may not include an end value, any end value may be independently included or not included, and may be any combination, that is, any lower limit may be combined with any upper limit to form a range. For example, if ranges of 60 to 120 and 80 to 110 are listed for specific parameters, it is understood that the ranges of 60 to 110 and 80 to 120 are also expected. In addition, if the smallest values 1 and 2 of a range are listed, and if the largest values 3, 4 and 5 of the range are listed, the following ranges are all expected: 1 to 3, 1 to 4, 1 to 5, 2 to 3, 2 to 4, and 2 to 5. In the present application, unless otherwise stated, a numerical range "a to b" represents a shorthand representation for a combination of any real numbers between a and b, where both a and b are real numbers. For example, a numerical range of "0 to 5" represents that all real numbers in the range of "0 to 5" have been listed herein, and "0 to 5" is merely a shorthand representation of combinations of these numerical values. In addition, when a parameter is expressed as an integer≥2, it is equivalent to listing that the parameter is an integer such as 2, 3, 4, 5, 6, 7, 8, 9, 10, 11, or 12. For example, when a parameter is expressed as an integer sleeted from "2~10", it is equivalent to listing integers 2, 3, 4, 5, 6, 7, 8, 9, and 10.

Unless otherwise defined, "multiple", "a plurality of" and the like related in the present application mean a number of two or more. For example, "one or more" means one or greater or equal to two.

Unless otherwise specified, all embodiments and optional embodiments of the present application may be combined with each other to form new technical solutions.

The "embodiment" mentioned herein means that a particular feature, structure, or characteristic described with reference to the embodiment may be included in at least one embodiment or implementation of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments. The "implementation" mentioned herein has a similar understanding.

Those skilled in the art may understand that, in the method of each implementation or embodiment, a writing order of each step does not mean a strict execution order to constitute any limitation on an implementation process, and a detailed execution order of each step should be determined by its function and possible internal logic. Unless otherwise specified, all steps in the present application may be performed sequentially or randomly. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

In the present application, in open technical features or technical solutions described by the words such as "contain", "include", and "comprise", unless otherwise specified, additional members other than the listed members are not excluded, and it may be considered that both closed features or solutions composed of the listed members and open features or solutions further including additional members in addition to the listed members are provided. For example, A includes a1, a2, and a3, and may further include another member or may not include an additional member unless otherwise specified, and it may be considered that both a feature or solution in which "A consists of a1, a2, and a3" and a feature or solution in which "A includes not only a1, a2, and a3 but also another member" are provided. In the present application, unless otherwise specified, A (e.g., B) means that B is a non-limiting example of A, and it may be understood that A is not limited to B.

In the present application, "optionally", "optional", and "option" means that there is or not, that is, means any one of two parallel solutions: "with" or "without". If "option" occurs repeatedly in a technical solution, each "option" is independent, unless otherwise specified without inconsistency or mutual restriction.

In a conventional silicon-carbon composite material, a silicon-based material is directly mixed with a carbon-based material, or the surface of a silicon-based material is coated with a carbon-based material layer, or a silicon-based material and a carbon-based material are granulated. These materials have a large limit on content of silicon. When the content of silicon is too high, expansion is still large, so that an electrode structure is easily damaged, thereby shortening a cycle life.

Based on the above problems, some examples of the present application provides a silicon-carbon composite material, including a porous carbon matrix and a silicon-based material layer located in pores of the porous carbon matrix. The silicon-based material layer includes a sub-nano silicon cluster and a sub-nano silicon carbide cluster, and the surface of the sub-nano silicon carbide cluster is in contact with the surface of the sub-nano silicon cluster.

In the silicon-carbon composite material, the silicon-based material layer is disposed in the pores of the porous carbon matrix, and the pores can reserve space for expansion of silicon, thereby reducing crushing of silicon-carbon composite material particles and prolonging the cycle life. In addition, at the silicon-based material layer, the presence of silicon carbide limits size growth of silicon, promotes formation of the sub-nano silicon cluster, and final formation of the sub-nano silicon carbide cluster and the sub-nano silicon cluster whose surfaces are in contact with each other. Compared with conventional nano silicon, the sub-nano silicon cluster has smaller expansibility, which reduces an expansion stress of the material, further reduces the crushing of silicon-carbon composite particles, and improve the cycle performance. Moreover, the sub-nano silicon cluster has a smaller radial size, which can reduce a diffusion distance of ions, improve solid-phase diffusion, and improve the fast charging performance.

In addition, the silicon-carbon composite material can further achieve a high energy density characteristic of the silicon-based material.

In some of examples, that the surface of the sub-nano silicon carbide cluster is in contact with the surface of the sub-nano silicon cluster means that the sub-nano silicon cluster and the sub-nano silicon carbide cluster are in an interlaced structure. As an example, the interlaced structure may be a mosaic-like arrangement structure.

It may be understood that the silicon-based material may form a layer structure in the pores of the porous carbon matrix by a method such as deposition.

Further, the sub-nano silicon cluster has a radial size of 0.2 nanometers (nm) to 1 nm.

Further, the sub-nano silicon carbide cluster has a radial size of 0.2 nm to 1 nm.

In some of examples, the porous carbon matrix has a specific surface area of greater than or equal to 800 square meters per gram (m²/g). By using the porous carbon matrix with an ultra-high specific surface area, more silicon-based materials can be deposited, thereby increasing a high energy density of the material. Further, the porous carbon matrix has a specific surface area of 800 m²/g to 2000 m²/g. In this way, the cycle performance can be improved in a case that the high energy density is relatively high. Specifically, the specific surface area of the porous carbon matrix includes, but is not limited to, 800 m²g, 900 m²/g, 1000 m²/g, 1100 m²/g, 1200 m²/g, 1300 m²/g, 1400 m²/g, 1500 m²/g, 1600 m²/g, 1700 m²/g, 1800 m²/g, 1900 m²/g, 2000 m²/g, or a range between any two of the foregoing. Further, the porous carbon matrix has a specific surface area of 800 m²/g to 1700 m²/g. Still further, the porous carbon matrix has a specific surface area of 800 m²/g to 1200 m²/g. Without limitation, the specific surface area of the porous carbon matrix may be measured by a nitrogen isothermal adsorption and desorption method.

In some of examples, the total volume of the silicon-based material layer is smaller than the total volume of the pores. Further, the total volume of the silicon-based material layer accounts for 10% to 60% of the total volume of the pores. In this way, on the one hand, the content of the silicon-based material is relatively large, and the high energy density is improved; and on the other hand, more expansion space is provided for the silicon-based material, the crushing of silicon-carbon composite material particles is reduced, and the cycle performance is improved. In addition, the fast charging performance can further be optimized to a certain extent. Specifically, the total volume of the silicon-based material layer accounts for, but is not limited to, 10%, 15%, 20%, 25%, 30%, 35%, 40%, 45%, 50%, 55%, 60%, or a range between any two of the foregoing, of the total volume of the pores. Further, the total volume of the silicon-based material layer accounts for 10% to 50% of the total volume of the pores. Still further, the total volume of the silicon-based material layer accounts for 10% to 30% of the total volume of the pores. Without limitation, the total volume of the silicon-based material layer may be obtained by calculating the pore volume of the porous carbon matrix before and after deposition of the silicon-based material layer, where the "pore volume" may be measured by a nitrogen isothermal adsorption and desorption method.

In some of examples, the thickness of the silicon-based material layer is smaller than the pore diameter of the pore.

Further, the pore has an average pore diameter of 5 nm to 50 nm. In this way, on the one hand, the content of the silicon-based material is relatively large, and the high energy density is improved; and on the other hand, more expansion space is provided for the silicon-based material, the crushing of silicon-carbon composite material particles is reduced, and the cycle performance is improved. In addition, the fast charging performance can further be improved to a certain extent. Specifically, the average pore diameter of the pore includes, but is not limited to, 5 nm, 10 nm, 15 nm, 20 nm, 25 nm, 30 nm, 35 nm, 40 nm, 45 nm, 50 nm, or a range between any two of the foregoing. Still further, the pore has an average pore diameter of 5 nm to 40 nm. Yet still further, the pore has an average pore diameter of 5 nm to 25 nm. Without limitation, the average pore diameter of the pore may be measured by a nitrogen isothermal adsorption and desorption method.

Further, the silicon-based material layer has an average thickness of 2 nm to 20 nm. In this way, on the one hand, the content of the silicon-based material is relatively large, and the high energy density is improved; and on the other hand, more expansion space is provided for the silicon-based material, the crushing of silicon-carbon composite material particles is reduced, and the cycle performance is improved. In addition, the fast charging performance can further be improved to a certain extent. Specifically, the average thickness of the silicon-based material layer includes, but is not limited to, 2 nm, 3 nm, 4 nm, 5 nm, 6 nm, 7 nm, 8 nm, 9 nm, 10 nm, 11 nm, 12 nm, 13 nm, 14 nm, 15 nm, 16 nm, 17 nm, 18 nm, 19 nm, 20 nm, or a range between any two of the foregoing. Still further, the silicon-based material layer has an average thickness of 2 nm to 18 nm. Yet still further, the silicon-based material layer has an average thickness of 2 nm to 10 nm. Without limitation, measurement can be performed by an indirect method. Specifically, when the average pore diameter of the porous carbon matrix before deposition of the silicon-based material layer is denoted as R1 and the average pore diameter after deposition of the silicon-based material layer is denoted as R2, the silicon-based material layer has an average thickness of (R1-R2)/2, where the "average pore diameter" can be determined by a nitrogen isothermal adsorption and desorption method.

In some of examples, the silicon-carbon composite material has a particle diameter Dv50 of 3 micrometers (µm) to 30 µm. In this way, on the one hand, deterioration of the cycle performance caused by side reactions during a cycle process can be reduced; and on the other hand, a diffusion distance of ions is reduced, and the fast charging performance is improved. In addition, a longer cycle life is further achieved. Specifically, the particle diameter Dv50 of the silicon-carbon composite material includes, but is not limited to, 3 µm, 5 µm, 8 µm, 10 µm, 12 µm, 15 µm, 20 µm, 25 µm, and 30 µm. Further, the silicon-carbon composite material has a particle diameter Dv50 of 10 µm to 30 µm. Still further, without limitation, the silicon-carbon composite material has a particle diameter Dv50 of 10 µm to 20 µm. The particle diameter Dv50 of the silicon-carbon composite material may pass a laser particle diameter test.

In some of examples, the surface of the porous carbon matrix is further coated with a coating layer.

In some of examples, the coating layer includes a carbon coating layer. Without limitation, a material of the carbon coating layer includes amorphous carbon.

In some of examples, the coating layer has an average thickness of 5 nm to 60 nm. In this way, corrosion of an electrolyte to the inside of the material during the cycle process can be better isolated, and conductivity of the material can also be improved. Without limitation, the average thickness of the carbon coating layer may be measured by a transmission electron microscope or a sputtering XPS.

In some of examples, in the silicon-carbon composite material, a silicon element has a mass percentage of 20% to 40%, and a carbon element has a mass percentage of 60% to 80%. In this way, this allows the material to have both a higher gram capacity and lower expansibility. Without limitation, content of the silicon element and the carbon element may be tested by an ICP test.

In some of examples, the silicon-carbon composite material has a tap density of 0.7 grams per cubic centimeter (g/cm³) to 1.3 g/cm³.

In some of examples, the silicon-carbon composite material has a specific surface area of 0.8 m²/g to 1.5 m²/g.

Some other examples of the present application provide a preparation method for a silicon-carbon composite material, including the following steps:
depositing a silicon-based material layer in pores of a porous carbon matrix, where the silicon-based material layer includes a sub-nano silicon cluster and a silicon carbide cluster, and the surface of the sub-nano silicon carbide cluster is in contact with the surface of the sub-nano silicon cluster.

The preparation method has simple steps, and is suitable for industrial popularization and application.

In addition, it may be understood that the silicon-carbon composite material involved in the preparation method has the same features and advantages as the silicon-carbon composite material in the above examples, and details are not described herein again.

Further, nanocrystallization of the silicon-based material can reduce expansion stress, thereby reducing crushing of material particles, and can also reduce a diffusion distance of irons, improve solid-phase diffusion, and improve a fast charging performance. In combination with the porous carbon matrix, space is reserved for expansion of the silicon-based material, which can greatly reduce the expansion. Therefore, a further objective of the present application is to prepare a silicon-based material at a sub-nano level.

In some of examples, the depositing a silicon-based material layer in pores of a porous carbon matrix includes:
placing the porous carbon matrix in a reaction vessel, and introducing a gas mixture of a silicon source gas and a carbon source gas for vapor deposition.

Further, in the mixed gas, the volume ratio of the silicon source gas to the carbon source gas is 10:(1~5). Specifically, the volume ratio of the silicon source gas to the carbon source gas includes, but is not limited to, 10:1, 10:2, 10:3, 10:4, 10:5, or a range between any two of the foregoing.

Without limitation, the silicon source gas includes SiH₄.

Without limitation, the carbon source gas includes C₂H₄.

Further, the flow rate of the gas mixture is 0.05 liters per minute (L/min) to 0.2 L/min. Specifically, the flow rate of the gas mixture includes, but is not limited to, 0.05 L/min, 0.08 L/min, 0.1 L/min, 0.12 L/min, 0.15 L/min, 0.2 L/min, or a range between any two of the foregoing.

Further, a deposition temperature is 400 degrees Celsius (°C) to 600 °C. Specifically, the deposition temperature includes, but is not limited to, 400°C, 450°C, 500°C, 550°C, 600°C, or a range between any two of the foregoing.

Further, deposition time is 30 minutes (min) to 2 hours (h). Specifically, the deposition time includes, but is not limited to, 30 min, 1 h, 1.5 h, 2 h, or a range between any two of the foregoing.

By preparing the silicon-based material layer by a vapor deposition method and reasonably regulating and controlling a gas ratio, a flow rate, a temperature and time in a preparation process, the generated silicon carbide can surround nucleated silicon, limit size growth thereof, and finally form the silicon-based material layer including a sub-nano silicon cluster and a silicon carbide cluster, and the surface of the silicon carbide cluster is in contact with the surface of the sub-nano silicon cluster.

In some of examples, after the depositing a silicon-based material layer, the method further includes a step of preparing a coating layer on the surface of the porous carbon matrix. Further, a method for preparing a coating layer on the surface of the porous carbon matrix includes a vapor deposition method. Without limitation, the coating layer is a carbon coating layer, the carbon source gas used may be one or two of CH₄ and C₂H₂, and temperature of deposition may be 600°C to 900°C. The time may be controlled based on a preset thickness, for example, may be 15 min to 30 min.

In some of examples, the preparation method for the porous carbon matrix includes a template method, an acid-base activation method, or a pyrolysis method.

As an example, in the template method, SiO₂ nanospheres may be used as a template and immersed in a carbon source solution, and the porous carbon matrix can be obtained by centrifugation, drying, annealing, and acid etching.

As an example, in the acid-base activation method, an activator such as potassium hydroxide or phosphoric acid can be mixed with a carbon source, and organic matters and natural templates inside the carbon source can be removed through physical and chemical spark effects to obtain the porous carbon matrix. The potassium hydroxide as a chemical activator can produce potassium carbonate, potassium oxide, and even metallic potassium, which can be removed in subsequent pyrolysis and washing, and phosphoric acids can generate phosphorus-containing functional groups in the carbon matrix to promote formation of micropores.

As an example, the pyrolysis method refers to obtaining the porous carbon matrix by pyrolysis means depending on characteristics of the gas generated by pyrolysis and the material itself without adding any template agent or activator.

Further, the preparation method for the porous carbon matrix includes an acid-base activation method.

In some of examples, the preparation method for the porous carbon matrix includes: mixing a template agent, a carbon source, and a solvent to prepare a carbon solution;
performing first heat treatment on the carbon solution, and then drying to prepare an expanded carbon precursor;
performing second heat treatment on the expanded carbon precursor to prepare a carbonized intermediate; and
removing the template agent in the carbonized intermediate to prepare the porous carbon matrix.

Further, a mass ratio of the template agent to the carbon source is (1~10):1. Specifically, the mass ratio of the template agent to the carbon source includes, but is not limited to, 1:1, 2:1, 2.7:1, 3:1, 4:1, 5:1, 6:1, 7:1, 8:1, 9:1, 10:1, or a range between any two of the foregoing.

Further, temperature of the first heat treatment is 70°C to 90°C, and time of the first heat treatment is 6 h to 10 h. Specifically, the temperature of the first heat treatment includes, but is not limited to, 70°C, 75°C, 80°C, 85°C, 90°C, or a range between any two of the foregoing. The time of the first heat treatment includes, but is not limited to, 6 h, 7 h, 8 h, 9 h, 10 h, or a range between any two of the foregoing.

Further, temperature of drying is 120°C to 140°C, and time of drying is 1 h to 4 h.

Further, the second heat treatment includes: heating to 400 °C to 600°C at a heating rate of 3°C/min to 10°C/min for 2 h to 6 h. Specifically, the heating rate of the second heat treatment includes, but is not limited to, 3°C/min, 4°C/min, 5°C/min, 6°C/min, 7°C/min, 8°C/min, 9°C/min, 10°C/min, or a range between any two of the foregoing. The temperature of the second heat treatment includes, but is not limited to, 400°C, 450°C, 500°C, 550°C, 600°C, or a range between any two of the foregoing. The time of the second heat treatment includes, but is not limited to, 2 h, 3 h, 4 h, 5 h, 6 h, or a range between any two of the foregoing.

In addition, without limitation, a method for removing the template agent in the carbonized intermediate may include acid treatment. For example, the carbonized intermediate is mixed with an acid solution and subjected to third heat treatment, and then washing and drying are performed.

Some other examples of the present application provide a negative electrode sheet, including a negative electrode current collector and a negative electrode active material layer disposed on at least one surface of the negative electrode current collector. The negative electrode active material layer includes one or more of the foregoing silicon-carbon composite material and the silicon-carbon composite material prepared by the foregoing preparation method.

Some other examples of the present application provide a secondary battery, including the foregoing negative electrode sheet.

Some other examples of the present application provide an electrical device, including one or more of the foregoing negative electrode sheet and the foregoing secondary battery.

In addition, the following appropriately describes the secondary battery and the electric device in the present application with reference to the accompanying drawings.

Generally, the secondary battery includes a positive electrode sheet, a negative electrode sheet, an electrolyte, and a separator. During charge and discharge of the battery, active ions are intercalated and deintercalated back and forth between the positive electrode sheet and the negative electrode sheet. The electrolyte functions to conduct ions between the positive electrode sheet and the negative electrode sheet. The separator is disposed between the positive electrode sheet and the negative electrode sheet, to mainly prevent positive and negative electrodes from being shortcircuited and allow ions to pass through.

### Positive electrode sheet

It may be understood that deintercalation and consumption of lithium (Li) occur during charge and discharge of the battery, and the content of Li in the positive electrode sheet varies when the battery is discharged to different states. In the enumeration of positive electrode materials in the present application, unless otherwise specified, the content of Li is in an initial state of the material. When the positive electrode material is applied to a positive electrode sheet in a battery system, the content of Li in the positive electrode material contained in the electrode sheet usually changes after a charge and discharge cycles. The content of Li may be measured by using a molar content, but is not limited thereto. For "the content of Li is in an initial state of the material", the initial state of the material means a state before the material is added to a positive electrode slurry. It may be understood that a new material obtained by performing appropriate modification on the enumerated positive electrode material is also within the scope of the positive electrode material, the foregoing appropriate modification refers to an acceptable modification manner for the positive electrode material, such as coating modification, and a non-limiting example of the acceptable modification manner is, for example, coating modification.

In the enumeration of the positive electrode material in the present application, the content of oxygen (O) is only a theoretical state value, the molar content of oxygen changes due to the release of oxygen from a lattice, and the actual molar content of O fluctuates. The content of O may be measured by using a molar content, but is not limited thereto.

The positive electrode sheet includes a positive current collector and a positive electrode active material layer disposed on at least one surface of the positive current collector.

As a non-limiting example, the positive electrode current collector has two surfaces opposite to each other in own thickness direction, and the positive electrode active material layer is disposed on either one or both of the two opposite surfaces of the positive electrode current collector.

In some of embodiments, the positive electrode current collector may be metal foil or a composite current collector. For example, an aluminum foil can be used as the metal foil. The composite current collector may include a polymer material base layer and a metal layer formed on at least one surface of the polymer material base layer. The composite current collector may be obtained by forming a metal material on a polymer material substrate. In the positive electrode current collector, a non-limiting example of the metal material may include one or more of aluminum, an aluminum alloy, nickel, a nickel alloy, titanium, a titanium alloy, silver, a silver alloy, or the like. In the positive electrode current collector, a non-limiting example of the polymer material substrate may include one or more of substrates such as polypropylene (PP), polyethylene terephthalate (PET), polybutylene terephthalate (PBT), polystyrene (PS), and polyethylene (PE).

In some of embodiments, the positive electrode active material may be a positive electrode active material for a battery known in the art. As a non-limiting example, a positive electrode active material may include one or more of the following materials: olivine-structured lithium-containing phosphate, a lithium transition metal oxide, and respective modified compounds thereof. However, the present application is not limited to these materials, and other conventional materials that can be used as a positive electrode active material of a battery may also be used. These positive electrode active materials may be used alone or in combination of two or more thereof. An example of the lithium transition metal oxide may include, but is not limited to, one or more of lithium cobalt oxide (such as LiCoO₂), lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Non-limiting examples of the olivine-structured lithium-containing phosphate may include, but are not limited to, one or more of lithium iron phosphate, a composite material of lithium iron phosphate and carbon, lithium manganese phosphate, a composite material of lithium manganese phosphate and carbon, lithium ferric manganese phosphate, a composite material of lithium ferric manganese phosphate and carbon, and respective modified compounds thereof. A non-limiting example of the lithium cobalt oxide includes LiCoO₂; a non-limiting example of the lithium nickel oxide includes LiNiO₂; a non-limiting example of the lithium manganese oxide includes LiMnO₂, LiMn₂O₄, or the like; a non-limiting example of the lithium nickel cobalt manganese oxide includes LiNi_{1/3}Co_{1/3}Mn_{1/3}O₂ (or may be referred to as NCM₃₃₃ for short), LiNi_{0.5}Co_{0.2}Mn_{0.3}O₂ (or may be referred to as NCM₅₂₃ for short), LiNi_{0.5}Co_{0.25}Mn_{0.25}O₂ (or may be referred to as NCM₂₁₁ for short), LiNi_{0.6}Co_{0.2}Mn_{0.2}O₂ (or may be referred to as NCM₆₂₂ for short), LiNi_{0.8}Co_{0.1}Mn_{0.1}O₂ (or may be referred to as NCM₈₁₁ for short), or the like. A non-limiting example of the lithium nickel cobalt aluminum oxide may include LiNi_{0.80}Co_{0.15}Al_{0.05}O₂.

In some of embodiments, the active material layer optionally further includes a binder. As a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some of embodiments, the positive electrode active material layer optionally further includes a conductive agent. As a non-limiting example, the conductive agent may include one or more of superconducting carbon, acetylene black, carbon black, ketjen black, carbon dots, carbon nanotubes, graphene, and carbon nanofibers.

In some of embodiments, the positive electrode sheet may be prepared in the following manner: dispersing the foregoing components such as the positive electrode active material, the conductive agent, the binder, and any other components for preparing the positive electrode sheet into a solvent to form an aqueous positive electrode slurry; and coating the positive electrode slurry on a positive electrode current collector, and performing procedures such as drying and cold pressing, to obtain the positive electrode sheet. The type of the solvent may be selected from any one of the foregoing implementations, for example, N-methylpyrrolidone (NMP). The surface of the positive electrode current collector to which the positive electrode slurry is applied may be a single surface of the positive electrode current collector or both surfaces of the positive electrode current collector. The surface of the positive electrode current collector to which the positive electrode slurry is applied may be a single surface of the positive electrode current collector or both surfaces of the positive electrode current collector. The solid content of the positive electrode slurry may be 40 wt% to 80 wt%. The viscosity of the positive electrode slurry at room temperature may be adjusted to 5000 millipascal·second (Pa·s) to 25000 mPa·s. When the positive electrode slurry is coated, the coating density per unit area on a dry weight basis (excluding the solvent) may be 15 milligrams per square centimeter (mg/cm²) to 35 mg/cm². The compaction density of the positive electrode sheet may be 3.0 grams per cubic centimeter (g/cm³) to 3.6 g/cm³, and selectively be 3.3 g/cm³ to 3.5 g/cm³.

### Negative electrode sheet

The negative electrode sheet is as mentioned above.

In addition, as a non-limiting example, the negative current collector has two surfaces opposite in own thickness direction, and the negative active material is disposed on either one or both of the two opposite surfaces of the negative current collector.

In some of embodiments, the negative electrode current collector may be metal foil or a composite current collector. For example, a copper foil may be used as the metal foil. The composite current collector may include a polymer material base layer and a metal layer formed on at least one surface of a polymer material substrate. The composite current collector may be obtained by forming a metal material on a polymer material substrate. In the negative electrode current collector, a non-limiting example of the metal material may include one or more of copper, a copper alloy, nickel, a nickel alloy, titanium, a titanium alloy, silver, a silver alloy, and the like. In the negative electrode current collector, a non-limiting example of the polymer material substrate may include one or more of substrates such as polypropylene (PP), polyethylene terephthalate (PET), polybutylene terephthalate (PBT), polystyrene (PS), and polyethylene (PE).

In some of embodiments, the negative electrode active material layer may be the silicon-carbon composite material alone, or the silicon-carbon composite material may be mixed with other negative electrode active materials for batteries known in the art in any ratio. As a non-limiting example, the negative electrode active material for batteries may include one or more of the following materials: synthetic graphite, natural graphite, soft carbon, hard carbon, a silicon-based material, a tin-based material, lithium titanate, and the like. The silicon-based material may include one or more of elemental silicon, a silicon-oxygen compound, a silicon-carbon composite, a silicon-nitrogen composite, and a silicon alloy. The tin-based material may include one or more of elemental tin, a tin-oxygen compound, and a tin alloy. However, the present application is not limited to these materials, and another conventional material that can be used as a negative electrode active material of a battery may also be used. These negative electrode active materials may be used alone or in combination of two or more thereof.

In some of embodiments, the carbon-based material includes one or more of synthetic graphite, natural graphite, soft carbon, and hard carbon.

In some of embodiments, the negative electrode active material layer optionally further includes a binder. The binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethylchitosan (CMCS).

In some of embodiments, the negative electrode active material layer optionally further includes a conductive agent. The conductive agent may include at least one or more of superconducting carbon, acetylene black, carbon black, ketjen black, carbon dots, carbon nanotubes, graphene, and carbon nanofibers.

In some of embodiments, the negative electrode active material layer optionally further includes other additives, for example, a thickening agent (such as sodium carboxymethyl cellulose (CMC-Na)).

In some of embodiments, the negative electrode sheet may be prepared in the following manner: dispersing the foregoing components such as the negative electrode active material, the conductive agent, the binder, and any other components for preparing the negative electrode sheet into a solvent (a non-limiting example of a solvent, such as deionized water) to form a negative electrode slurry; and coating the negative electrode slurry on a negative electrode current collector, and performing procedures such as drying and cold pressing, to obtain the negative electrode sheet. The surface of the negative electrode current collector to which the negative electrode slurry is applied may be a single surface of the negative electrode current collector or both surfaces of the negative electrode current collector. The solid content of the negative electrode slurry may be 40 wt% to 60 wt%. The viscosity of the negative electrode slurry at room temperature may be adjusted to 2000 mPa·s to 10000 mPa·s. When the negative electrode slurry is applied, the coating density per unit area on a dry weight basis (excluding the solvent) may be 75 g/m² to 220 g/m². Further, the compaction density of the negative electrode sheet may be 1.0 g/cm³ to 1.8 g/cm³.

### Electrolyte

The electrolyte functions to conduct ions between the positive electrode sheet and the negative electrode sheet. The type of the electrolyte is not particularly limited in the present application, and may be selected according to a requirement. For example, the electrolyte may be liquid, gelled or all solid.

In some of embodiments, the electrolyte is an electrolyte solution. The electrolyte solution includes an electrolyte salt and a solvent.

In some of embodiments, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis-trifluoromethanesulfonimide (LiTFSI), lithium trifluoromethanesulfonate (LiTFS), lithium difluorophosphate (LiPO₂F₂), lithium difluoro(oxalato)borate (LiDFOB), lithium dioxalate borate (LiBOB), lithium difluorodioxalate phosphate (LiDFOP), and lithium tetrafluorooxalate phosphate (LiTFOP).

In some of embodiments, the solvent may include one or more of ethylene carbonate 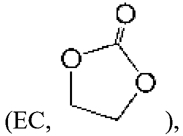 propylene carbonate 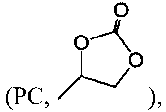 ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate 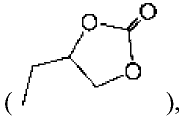 fluoroethylene carbonate (FEC), methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and ethyl sulfone.

In some of embodiments, the electrolyte solution optionally further includes an additive. For example, the additive may include a negative electrode film-forming additive or a positive electrode film-forming additive, and may further include an additive capable of improving specific performance of a battery, for example, an additive for improving overcharge performance of a battery, or an additive for improving high-temperature or low-temperature performance of a battery.

In some implementations, the additive in the electrolyte solution may include, but is not limited to, one or more of fluoroethylene carbonate (FEC), difluoroethylene carbonate (DFEC), trifluoromethyl ethylene carbonate (TFPC), or the like.

### Separator

In some of embodiments, the secondary battery further includes a separator. The type of the separator is not particularly limited in the present application, and any well-known porous separator with good chemical stability and mechanical stability may be used.

In some of embodiments, a material of the separator may include one or more of glass fiber, non-woven fabric, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some implementations, the thickness of the separator is 6 µm to 40 µm, optionally 12 µm to 20 µm.

In some of embodiments, the positive electrode sheet, the negative electrode sheet, and the separator may be manufactured into the electrode assembly through a winding process or a lamination process.

In some of embodiments, the secondary battery may include an outer package. The outer package may be used to package the electrode assembly and the electrolyte.

In some of embodiments, the outer package of the battery may be a hard shell, such as a hard plastic shell, an aluminum shell, and a steel shell. The outer package of the secondary battery may also be a pouch, such as a bag-type pouch. A material of the pouch may be plastic, and further, non-limiting examples of the plastic may include one or more of polypropylene, polybutylene terephthalate, and polybutylene succinate.

The secondary battery includes at least one battery cell. The secondary battery may include one or a plurality of battery cells.

In the present application, unless otherwise specified, a "battery cell" refers to a basic unit capable of implementing mutual conversion of chemical energy and electrical energy, and further, generally includes at least a positive electrode sheet, a negative electrode sheet, and an electrolyte. During charge and discharge of the battery, active ions are intercalated and deintercalated back and forth between the positive electrode sheet and the negative electrode sheet. The electrolyte functions to conduct active ions between the positive electrode sheet and the negative electrode sheet.

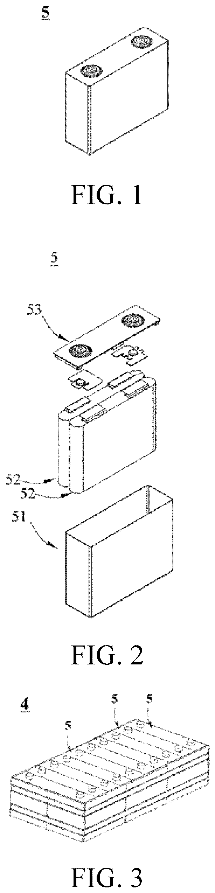

The shape of the battery cell is not particularly limited in the present application, and may be a cylindrical shape, a square shape, or any other shape. For example, FIG. 1 shows a battery cell 5 with a square structure as an example.

In some of embodiments, referring to FIG. 2, the outer package may include a housing 51 and a cover plate 53. The housing 51 may include a bottom plate and side plates connected to the bottom plate, and the bottom plate and the side plates may define an accommodating chamber. The housing 51 has an opening communicating with the accommodating chamber, and the cover plate 53 can cover on the opening to close the accommodating chamber. The positive electrode sheet, the negative electrode sheet, and the separator may be formed into an electrode assembly 52 through a winding process or a lamination process. The electrode assembly 52 is packaged in the accommodating chamber. The electrolyte solution is impregnated into the electrode assembly 52. There may be one or a plurality of electrode assemblies 52 included in the battery cell 5, and those skilled in the art may perform selection based on actual requirements.

The secondary battery may be a battery module 4 or a battery pack 1.

The battery module includes at least one battery cell. There may be one or a plurality of battery cells included in the battery module, and those skilled in the art may select an appropriate number on the application and capacity of the battery module.

FIG. 3 shows a battery module 4 as an example. Referring to FIG. 3, in the battery module 4, a plurality of battery cells 5 may be arranged sequentially in the length direction of the battery module 4. Certainly, the secondary batteries may alternatively be arranged in any other manner. Further, the plurality of battery cells 5 may be fastened by using fasteners.

Optionally, the battery module 4 may further include a casing having an accommodating space in which the plurality of battery cells 5 are accommodated.

In some of embodiments, the battery modules may be further assembled into a battery pack, and there may be one or a plurality of battery modules included in the battery pack. The appropriate number may be selected by those skilled in the art based on the application and capacity of the battery pack.

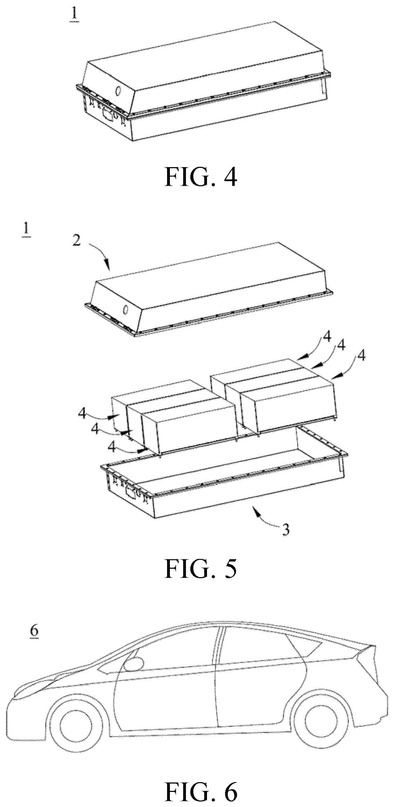

FIG. 4 and FIG. 5 show a battery pack 1 as an example. Referring to FIG. 4 and FIG. 5, a battery case and a plurality of battery modules 4 disposed in the battery case may be included in the battery pack 1. The battery case includes an upper case 2 and a lower case 3, the upper case 2 being capable of covering the lower case 3 and forming a closed space for accommodating the battery modules 4. The plurality of battery modules 4 may be arranged in any manner in the battery box.

In addition, the present application further provides an electrical device. The electrical device includes the secondary battery provided in the present application. The secondary battery may be used as a power supply for the electric device, or as an energy storage unit for the electric device. The electric device may include, but is not limited thereto, a mobile device, an electric vehicle, an electric train, a ship, a satellite, an energy storage system, and the like. For example, the mobile device may be a mobile phone or a notebook computer. For example, the electric vehicle may be, but is not limited thereto, a full electric vehicle, a hybrid electric vehicle, a plug-in hybrid electric vehicle, an electric bicycle, an electric scooter, an electric golf cart, or an electric truck.

As an electric device, the secondary battery may be selected according to use requirements of the electric device.

FIG. 6 shows an electrical device 6 as an example. The electric device is a pure electric vehicle, a hybrid electric vehicle, a plug-in hybrid electric vehicle, or the like. In order to meet the demand for high power and high energy density of the secondary battery by the electric device, a battery pack or a battery module may be used.

In another example, the apparatus may be a cell phone, a tablet computer, a notebook computer, or the like. The device is generally required to be thin and lightweight, and may use a battery cell as a power supply.

Examples of the present application are described below. The example described below are illustrative only and are not to be construed as limiting the present application. Techniques or conditions are not indicated in the embodiments, and the embodiments are performed based on techniques or conditions described in documents in the art or based on the specification of the product. The reagents or instruments used without specifying the manufacturer(s) are conventional products that are commercially available.

### Embodiment 1

### (1) Preparation of a positive electrode sheet

A positive electrode slurry is obtained by dispersing a positive electrode active material NCM811, conductive carbon black SP and a binder PVDF into a solvent NMP in a weight ratio of 98:1:1 for uniform mixing. The positive electrode slurry is uniformly coated on both side surfaces of a positive current collector aluminum foil, and dried and cold-pressed to obtain the positive electrode sheet, where the bilateral coating amount per unit area is 0.27 g/1540.25 mm².

### (2) Preparation of a negative electrode sheet

### 2.1. Preparation of a negative electrode active material

**Preparation of a porous carbon matrix:** 11g of glucose monohydrate and 30g of zinc chloride are placed in a 200 mL beaker, 30 mL of deionized water is added, and stirring is performed with a glass rod to form a clear and transparent solution. The solution is transferred to a constant-temperature heating magnetic stirrer and heated to 80°C, slowly and mechanically stirred with a stirring blade for 8 h to evaporate most of water, and a residue forms a uniform brown-black viscous liquid. The temperature of an air-blowing drying oven is raised to 130°C in advance. The brown-black viscous liquid is immediately placed therein while hot and kept for 2 h to obtain a loose porous expanded carbon precursor. After a carbon precursor is cooled to room temperature, the carbon precursor is loaded into a tubular resistance furnace with a magnetic boat, and a heating rate is controlled to be 6°C/min. The temperature is raised to 500°Cand kept for 4 h, and N₂ shielding gas is introduced in an entire carbonization process.

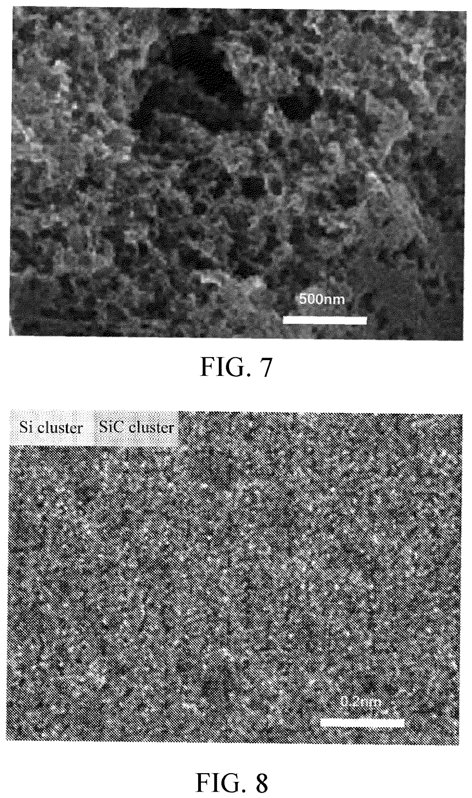

250 mL of 1mol/L dilute hydrochloric acid is prepared, a carbonized product cooled to room temperature is ground into powder with an agate mortar, 50 mL of 1 mol/L dilute hydrochloric acid and all the powder are mixed in an Erlenmeyer flask, and heated to boiling on a constant-temperature heating magnetic stirrer and kept for 20 min repeatedly four times to wash off a template agent in the carbon material. After a washing solution is filtered off, the carbon material is washed with a large amount of deionized water until neutral and placed in a blast drying oven at 110°C to be dried for 20 h, to prepare a porous carbon matrix. An electron microscope image of the porous carbon matrix is shown in FIG. 7. It can be learned that the prepared carbon matrix has a porous structure.

**Preparation of a silicon-based material layer:** The porous carbon matrix is placed in a tube furnace at 500°C; a gas mixture (the volume ratio being 10:3) of SiH₄ and C₂H₄ is introduced at an introduction rate of 0.1 L/min for 1 h. The carbon-based material layer is deposited in pores of the porous carbon matrix. An electron microscope image of the silicon-based material layer is shown in FIG. 8. It can be learned that the silicon-based material layer includes a sub-nano silicon cluster and a silicon carbide cluster, and the surfaces of the sub-nano silicon cluster and the silicon carbide cluster are in contact, or the silicon carbide cluster is located around the sub-nano silicon cluster, the sub-nano silicon cluster has a radial size of about 0.2 nm to 1 nm, and the sub-nano silicon carbide cluster has a radial size of about 0.2 nm to 1 nm.

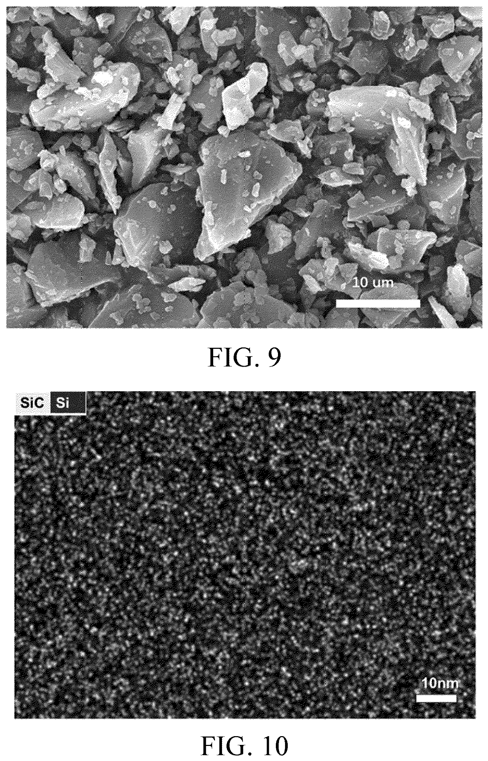

**Preparation of a carbon coating layer:** Then, the introduced gas is replaced with CH₄, and the temperature is set to 700°C for 25 min. An amorphous carbon coating layer is formed on the surface of the porous carbon matrix, and then cooled to room temperature to obtain the silicon-carbon composite material, where the amorphous carbon coating layer has the thickness of 30 nm. An electron microscope picture of the silicon-carbon composite material is shown in FIG. 9.

2.2. The silicon-carbon composite material prepared in step 2.1 is used as a negative electrode active material to be mixed with a thickener sodium carboxymethyl cellulose, an adhesive styrene-butadiene rubber and a conductive agent acetylene black in a mass ratio of 97:1:1:1, and deionized water is added to obtain a negative electrode slurry under the action of a vacuum stirrer. The negative electrode slurry is uniformly coated on both side surfaces of the copper foil. The copper foil is transferred to a 120 °C oven to be dried for 1 h after drying at room temperature, then the copper foil is overcooled, pressed, and slit to obtain the negative electrode sheet, where the bilateral coating amount per unit area is 0.17 g/1540.25 mm².

### (3) Separator

A polyethylene porous film having the thickness of 12 µm is selected as the separator.

### (4) Preparation of an electrolyte solution

The organic solvent is a mixed solution containing ethylene carbonate (EC), ethyl methyl carbonate (EMC) and diethyl carbonate (DEC), where the volume ratio of EC, EMC and DEC is 20:20:60. In an argon atmosphere glove box with a water content of smaller than 10 ppm, a sufficiently dried lithium salt LiPF6 is dissolved in an organic solvent and mixed uniformly to obtain an electrolyte solution. The concentration of the lithium salt is 1 mol/L.

### (5) Preparation of a battery

The positive electrode sheet, the separator, and the negative electrode sheet are stacked in sequence, so that the separator is located between the positive electrode sheet and the negative electrode sheet to play a role of isolation, and then wound into a square bare cell. Then, an aluminum plastic film is loaded, and then baked at 80°C to remove water. 10g of a corresponding non-aqueous electrolyte is injected, sealed. After standing, hot and cold pressing, formation, clamping, capacity grading and other procedures, a finished battery with a capacity of 4000 mAh is obtained.

The preparation methods of the secondary batteries of embodiments 2 to 19 are similar to the secondary battery of embodiment 1, and main differences lie in that the specific surface areas of the porous carbon matrix, percentages of the total volume of the silicon-based material layer in the total volume of pores of the porous carbon matrix, the average pore diameters of the pores of the porous carbon matrix, and the thicknesses of the silicon-based material layer are different.

The electron microscope image of the silicon-based material layer prepared in embodiment 7 is shown in FIG. 10. It can be learned that through co-deposition of the silicon source gas SiH₄ and the carbon source gas (C₂H₄), the sub-nano silicon carbide cluster is deposited and formed while the sub-nano silicon cluster is deposited and formed, and the two clusters are intercrossed and grown. Finally, the sub-nano silicon cluster and the sub-nano silicon carbide cluster in contact with each other are formed at the silicon-based material layer, and the contact between the sub-nano silicon cluster and the sub-nano silicon carbide cluster is characterized by an intercrossed and mosaic-like structure.

The preparation method for the secondary battery in comparative example 1 is similar to the preparation method for the secondary battery of embodiment 1, and main differences lie in that C₂H₄ is not introduced in a preparation process of the silicon-based material layer. That is, the silicon-based material layer is an Si layer.

**Table 1**

| | Specific surface area of a porous carbon matrix (m²/g) | Percentage of the total volume of a silicon-based material layer in the total volume of pores of a porous carbon matrix | Average pore diameter (nm) of a pore of the porous carbon matrix | Thickness of the silicon-based material layer (nm) | Particle diameter Dv50 (µm) of a silicon-carbon composite material | Mass percentage of a silicon element | Mass percentage of a carbon element | Tap density (g/cm³) of the silicon-carbon composite material | Specific surface area (m²/g) of the silicon-carbon composite material |
|---|---|---|---|---|---|---|---|---|---|
| Embodiment 1 | **1500** | 50% | 25 | 10 | 15 | 30% | 70% | 1 | 1.3 |
| Embodiment 2 | **800** | 50% | 25 | 10 | 15 | 20% | 80% | 0.7 | 1.3 |
| Embodiment 3 | **1200** | 50% | 25 | 10 | 15 | 25% | 75% | 0.9 | 1.3 |
| Embodiment 4 | **1700** | 50% | 25 | 10 | 15 | 35% | 65% | 1.2 | 1.3 |
| Embodiment 5 | **2000** | 50% | 25 | 10 | 15 | 40% | 60% | 1.3 | 1.3 |
| Embodiment 6 | 1500 | **10%** | 25 | **4** | 15 | 20% | 80% | 0.8 | 1.3 |
| Embodiment 7 | 1500 | **20%** | 25 | **5** | 15 | 35% | 65% | 0.83 | 1.3 |
| Embodiment 8 | 1500 | **30%** | 25 | **8** | 15 | 25% | 75% | 0.9 | 1.3 |
| Embodiment 9 | 1500 | **60%** | 25 | **13** | 15 | 35% | 65% | 1.2 | 1.3 |
| Embodiment 10 | 1500 | 50% | **5** | **2** | 15 | 30% | 70% | 1 | 1.3 |
| Embodiment 11 | 1500 | 50% | **15** | **5** | 15 | 30% | 70% | **1** | 1.3 |
| Embodiment 12 | 1500 | 50% | **20** | **8** | 15 | 30% | 70% | **1** | 1.3 |
| Embodiment 13 | 1500 | 50% | **30** | **14** | 15 | 30% | 70% | **1** | 1.3 |
| Embodiment 14 | 1500 | 50% | **40** | **18** | 15 | 30% | 70% | **1** | 1.3 |
| Embodiment 15 | 1500 | 50% | **50** | **20** | 15 | 30% | 70% | **1** | 1.3 |
| Embodiment 16 | 1500 | 50% | 25 | 10 | **3** | 30% | 70% | **1** | 1.5 |
| Embodiment 17 | 1500 | 50% | 25 | 10 | **10** | 30% | 70% | **1** | 1.4 |
| Embodiment 18 | 1500 | 50% | 25 | 10 | **20** | 30% | 70% | **1** | 1 |
| Embodiment 19 | 1500 | 50% | 25 | 10 | **30** | 30% | 70% | **1** | 0.8 |
| Comparative example 1 | 1500 | 50% | 25 | 10 | 15 | 35% | 65% | 1.1 | 1.3 |

### Test Example

### Test method:

### (1) Anode full charge rebound:

An original thickness of the negative electrode sheet is denoted as WO. Then, the assembled battery is disassembled after being fully charged, and the thickness of the negative electrode sheet after being fully charged is measured and denoted as W1.

The anode full charge rebound α is equal to (W1-WO)/WO.

### (2) Fast charging performance:

At 25°C, the battery pre-buried with a copper wire is taken and charged at a constant current of 0.33C to 4.25 V, and continuously charged at a constant voltage to a current of 0.05C, at which time the battery is in a fully charged state, and the charging capacity at this point is recorded as a first-cycle charging capacity; and after the battery is left to stand for 30 min, the battery is discharged at a constant current of 0.33C to 2.5 V. Then, one cycle charge-discharge process is completed, and the discharging capacity at this point is recorded as a first-cycle discharging capacity. Then, lithium plating is started, a charging device is connected to the copper wire and the positive electrode, and charging is performed at a constant current of 20 uA for 2 h. Then, the charging device is connected to the copper wire and the negative electrode, and charging is performed at a constant current of 20 uA for 2 h. That is, the copper wire plated with lithium is a reference electrode, and a potential of the reference electrode is 0 mV by default. After lithium plating, the battery is charged at a constant current of 2C, a potential difference between the negative electrode and the reference electrode is recorded. When the potential difference reaches 0 mV, a ratio of the charged capacity to the first-cycle charging capacity is recorded, and the ratio represents the fast charging performance of the secondary battery.

### (3) Cycle life:

At 25°C, the above prepared battery is taken and charged at a constant current of 0.5C to 4.25 V, and continuously charged at a constant voltage to a current of 0.05C, at which time the battery is in a fully charged state, and the charging capacity at this point is recorded as a first-cycle charging capacity; and after the battery is left to stand for 30 min, the battery is discharged at a constant current of 1C to 2.5 V. Then, one cycle charge-discharge process is completed, and the discharging capacity at this point is recorded as a first-cycle discharging capacity. The battery is subjected to a cyclic charge-discharge test based on the method described above, the discharge capacity after each cycle is recorded until the discharge capacity of the battery is attenuated to 80% of the first-cycle discharge capacity, and the cycle number at this time is used to characterize the cycle performance of the battery.

### (4) Energy density:

The battery is left to stand in a constant temperature environment of 25°C for 2 h, then charged to 4.25 V at 0.33C at 2.5 V to 4.25 V, then charged at a constant voltage of 4.25 V until the current is less than or equal to 0.05C, left to stand for 10 min, and then discharged to 2.5 V at 0.33C, and the capacity C0 of the battery is recorded. VED is a ratio of C0 to the volume of the battery case, which is the volume energy density (VED) of the secondary battery

Test results are illustrated in Table 2.

**Table 2**

| | Anode full charge rebound | Fast charging performance | Cycle life (cycle) | Energy density (Wh/L) |
|---|---|---|---|---|
| Embodiment 1 | 33% | 70% | 621 | 745 |
| Embodiment 2 | 30% | 68% | 709 | 732 |
| Embodiment 3 | 32% | 69% | 655 | 738 |
| Embodiment 4 | 35% | 71% | 615 | 748 |
| Embodiment 5 | 37% | 73% | 603 | 750 |
| Embodiment 6 | 28% | 80% | 682 | 728 |
| Embodiment 7 | 32% | 72% | 628 | 750 |
| Embodiment 8 | 31% | 76% | 650 | 731 |
| Embodiment 9 | 34% | 67% | 618 | 749 |
| Embodiment 10 | 33% | 76% | 639 | 740 |
| Embodiment 11 | 33% | 74% | 629 | 742 |
| Embodiment 12 | 33% | 73% | 626 | 744 |
| Embodiment 13 | 33% | 66% | 619 | 747 |
| Embodiment 14 | 36% | 63% | 615 | 748 |
| Embodiment 15 | 37% | 61% | 603 | 751 |
| Embodiment 16 | 33% | 80% | 544 | 739 |
| Embodiment 17 | 33% | 78% | 610 | 742 |
| Embodiment 18 | 33% | 74% | 618 | 744 |
| Embodiment 19 | 33% | 67% | 632 | 746 |
| Comparative example 1 | 56% | 50% | 350 | 700 |

It can be learned that, in the present application, the sub-nano silicon cluster and the sub-nano silicon carbide cluster are arranged at the silicon-based material layer, so that the prepared material can have smaller expansibility, better cycle performance and fast charging performance, and can further have a higher energy density.

The above descriptions of the various embodiments tend to emphasize differences between the various embodiments. For same or similar parts thereof, refer to these embodiments. For brevity, details are not described herein again.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the embodiments without departing from the subject matter of the present application, and other embodiments constructed by combining some of the constituent elements in the embodiments are also included in the scope of the present application.

## Claims

1. A silicon-carbon composite material, comprising a porous carbon matrix and a silicon-based material layer located in pores of the porous carbon matrix, wherein the silicon-based material layer comprises a sub-nano silicon cluster and a sub-nano silicon carbide cluster, and the surface of the sub-nano silicon carbide cluster is in contact with the surface of the sub-nano silicon cluster.

2. The silicon-carbon composite material according to claim 1, wherein the silicon-carbon composite material comprises one or two of the following features:
(1) the sub-nano silicon cluster has a radial size of 0.2 nm to 1 nm; and
(2) the sub-nano silicon carbide cluster has a radial size of 0.2 nm to 1 nm.

3. The silicon-carbon composite material according to claim 1 or 2, wherein the porous carbon matrix has a specific surface area of greater than or equal to 800 m²/g.

4. The silicon-carbon composite material according to claim 3, wherein the porous carbon matrix has a specific surface area of 800 m²/g to 2000 m²/g.

5. The silicon-carbon composite material according to claim 4, wherein the porous carbon matrix has a specific surface area of 800 m²/g to 1200 m²/g.

6. The silicon-carbon composite material according to any one of claims 1 to 5, wherein the total volume of the silicon-based material layer is less than the total volume of the pores.

7. The silicon-carbon composite material according to claim 6, wherein the total volume of the silicon-based material layer accounts for 10% to 60% of the total volume of the pores.

8. The silicon-carbon composite material according to claim 7, wherein the total volume of the silicon-based material layer accounts for 10% to 30% of the total volume of the pores.

9. The silicon-carbon composite material according to any one of claims 1 to 8, wherein the thickness of the silicon-based material layer is smaller than the pore diameter of the pore.

10. The silicon-carbon composite material according to claim 9, wherein the pore has an average pore diameter of 5 nm to 50 nm.

11. The silicon-carbon composite material according to claim 9 or 10, wherein the silicon-based material layer has an average thickness of 2 nm to 20 nm.

12. The silicon-carbon composite material according to any one of claims 1 to 11, wherein the silicon-carbon composite material has a particle diameter Dv50 of 3 µm to 30 µm.

13. The silicon-carbon composite material according to claim 12, wherein the silicon-carbon composite material has a particle diameter Dv50 of 10 µm to 20 µm.

14. The silicon-carbon composite material according to any one of claims 1 to 13, wherein the surface of the porous carbon matrix is further coated with a coating layer; and the coating layer comprises a carbon coating layer.

15. The silicon-carbon composite material according to any one of claims 1 to 14, wherein in the silicon-carbon composite material, a silicon element has a mass percentage of 20% to 40%, and a carbon element has a mass percentage of 60% to 80%.

16. The silicon-carbon composite material according to any one of claims 1 to 15, wherein the silicon-carbon composite material comprises one or two of the following features:
(1) the tap density is 0.7 g/m³ to 1.3 g/m³; and
(2) the specific surface area is 0.8 m²/g to 1.5 m²/g.

17. A preparation method for a silicon-carbon composite material, comprising the following steps:
depositing a silicon-based material layer in pores of a porous carbon matrix, wherein the silicon-based material layer comprises a sub-nano silicon cluster and a silicon carbide cluster, and the surface of the sub-nano silicon carbide cluster is in contact with the surface of the sub-nano silicon cluster.

18. The preparation method for a silicon-carbon composite material according to claim 17, wherein the depositing a silicon-based material layer in pores of a porous carbon matrix comprises:
placing the porous carbon matrix in a reaction vessel, and introducing a gas mixture of a silicon source gas and a carbon source gas for vapor deposition.

19. The preparation method for a silicon-carbon composite material according to claim 18, wherein the introducing a gas mixture of a silicon source gas and a carbon source gas for vapor deposition comprises one or more of the following features:
(1) in the gas mixture, the volume of the silicon source gas to the carbon source gas is 10:(1~5);
(2) the silicon source gas comprises SiH₄;
(3) the carbon source gas comprises C₂H₄;
(4) the flow rate of the gas mixture is 0.05 L/min to 0.2 L/min;
(5) the deposition temperature is 400°C to 600°C; and
(6) deposition time is 30 min to 2 h.

20. The preparation method for a silicon-carbon composite material according to any one of claims 17 to 19, wherein after the depositing a silicon-based material layer, the method further comprises a step of preparing a coating layer on the surface of the porous carbon matrix.

21. The preparation method for a silicon-carbon composite material according to any one of claims 17 to 20, wherein a preparation method for the porous carbon matrix comprises a template method, an acid-base activation method, or a pyrolysis method.

22. The preparation method for a silicon-carbon composite material according to any one of claims 17 to 21, wherein the preparation method for the porous carbon matrix comprises:
mixing a template agent, a carbon source, and a solvent to prepare a carbon solution;
performing first heat treatment on the carbon solution, and then drying to prepare an expanded carbon precursor;
performing second heat treatment on the expanded carbon precursor to prepare a carbonized intermediate; and
removing the template agent in the carbonized intermediate to prepare the porous carbon matrix.

23. The preparation method for a silicon-carbon composite material according to claim 22, wherein the preparation method for the porous carbon matrix has one or more of the following features:
(1) a mass ratio of the template agent to the carbon source is (1~10):1;
(2) temperature of the first heat treatment is 70°C to 90°C, and time of the first heat treatment is 6 h to 10 h;
(3) temperature of drying is 120°C to 140°C, and time of drying is 1 h to 4 h; and
(4) the second heat treatment comprises: heating to 400°C to 600°C at a heating rate of 3°C/min to 10°C/min for 2 h to 6 h.

24. A negative electrode sheet, comprising a negative electrode current collector and a negative electrode active material layer disposed on at least one surface of the negative electrode current collector, wherein the negative electrode active material layer comprises one or more of the silicon-carbon composite material according to any one of claims 1 to 16 and the silicon-carbon composite material prepared in the preparation method according to any one of claims 17 to 23.

25. A secondary battery, comprising the positive electrode sheet according to claim 24.

26. An electrical device, comprising one or more of the negative electrode sheet according to claim 24 and the secondary battery according to claim 25.
